# EUROPÄISCHE PATENTSCHRIFT

(11) **EP 0 378 119 B1**
(45) Veröffentlichungstag und Bekanntmachung des Hinweises auf die Patenterteilung: **29.12.1993**
(21) Anmeldenummer: 90100183.4
(22) Anmeldetag: 05.01.1990
(51) Int. Cl.: A47L 9/24, A47L 9/02, F16L 37/08

(54) **Gelenkmuffe eines Saugmundstückes mit drehbar gelagertem Anschlussstutzen für eine Saugleitung**
Rotatable sleeve connection between a vacuum cleaner nozzle and its suction hose
Connexion rotative à manchon pour buse d'aspirateur et son tuyau

(30) Priorität: 11.01.1989 DE 3900579
(43) Veröffentlichungstag der Anmeldung: 18.07.1990
(73) Patentinhaber: Fedag, CH-8590 Romanshorn (CH)
(72) Erfinder: Eckart,Albrecht, CH-8590 Romanshorn (CH)
(74) Vertreter: Jackisch, Walter

(56) Entgegenhaltungen:
- EP-A- 0 292 745
- DE-A- 2 829 439
- DE-U- 8 808 108
- US-A- 4 537 424

## Beschreibung

Die Erfindung betrifft eine Gelenkmuffe eines Saugmundstückes mit in ihr drehbar gelagertem Anschlußstutzen einer Saugleitung eines Saugreinigungsgerätes gemäß den Merkmalen des Oberbegriffes des Anspruches 1.

Zum drehbaren Anschluß der Saugleitung eines Saugreinigungsgerätes am Saugmundstück ist es bekannt (US-A-4537424, Fig. 2), in der Gelenkmuffe des Saugwerkzeuges den Anschlußstutzen, der die Saugleitung aufnimmt, drehbar zu lagern. Diese drehbare Lagerung ist erforderlich, weil beim Arbeiten mit dem Saugmundstück die als flexibler Schlauch ausgebildete Saugleitung Teildrehungen um ihre Längsachse infolge der hin- und hergehenden Arbeitsbewegungen ausführt. Bei der bekannten Ausführung ist der die Saugleitung aufnehmende Anschlußstutzen zur leichtgängigen Drehung und gleichzeitig sicheren axialen Fixierung an seinem in die Gelenkmuffe des Saugmundstückes hineinragenden Ende mit einem im Durchmesser gegenüber dem Anschlußstutzen vergrößerten Bord versehen. Dieser Bord rastet in eine in die Aufnahmebohrung der Gelenkmuffe eingearbeitete Hinterschneidung ein. Diese Hinterschneidung ist in ihrer Breite und in ihrem Durchmesser größer ausgeführt als die Dicke und der Außendurchmesser des Bordes am Anschlußstutzen, so daß dieser leicht drehbar in der Gelenkmuffe gelagert und axial fixiert ist. Die Einbringung der Hinterschneidung in die Aufnahmebohrung der Gelenkmuffe ist sehr aufwendig und entsprechend teuer, da dies durch eine zusätzliche, spanabhebende Bearbeitung erfolgt. Bedingt durch die Fertigung der Gelenkmuffe als thermoplastisches Formteil ergibt sich bei der spanabhebenden Fertigung eine Gratbildung, die nur sehr umständlich zu entfernen ist.

Mit der Erfindung wird die Aufgabe verfolgt, eine Gelenkmuffe eines Saugmundstückes mit den Merkmalen des Gattungsbegriffes so weiterzubilden, daß eine nachträgliche spanabhebende Bearbeitung insbesondere der Drehverbindung dieser Gelenkmuffe vermieden ist und die Gelenkmuffe als Ganzes in einfacher Weise kostensparend herstellbar ist.

Diese Aufgabe wird bei einer Gelenkmuffe mit den Merkmalen des Gattungsbegriffes durch die Merkmale des Kennzeichens des Anspruches 1 gelöst.

Der Lösung liegt der Gedanke zugrunde, in die zylindrische Aufnahmeöffnung der Gelenkmuffe des Saugmundstückes eine Hülse einzusetzen, deren Längserstreckung kleiner ist als die Tiefe der inneren zylindrischen Aufnahmeöffnung der Gelenkmuffe, so daß zwischen der stirnseitigen Endfläche der Hülse und der Endfläche der Aufnahmebohrung ein Freiraum in Form einer Hinterschneidung zur Aufnahme des im Durchmesser größeren Bordes des in die Hülse eingeführten Anschlußstutzens gebildet wird. Zur Halterung dieser Hülse in der Aufnahmeöffnung der Gelenkmuffe ist die Hülse an ihrer Außenumfangsfläche mit Rastmitteln, beispielsweise zwei einander gegenüberliegenden Rastnocken, versehen, die von der Außenfläche abstehen und in zugeordnete Öffnungen in der Wand der Gelenkmuffe hineinragen. Dabei können zur Erleichterung des Einschiebens der Hülse in die Aufnahmeöffnung der Gelenkmuffe diese Rastnocken in Einschubrichtung entsprechend angeschrägt oder in anderer Weise ausgebildet sein. Vorteilhaft sind in Einschubrichtung der Hülse liegende Teile elastisch nachgiebig ausgebildet, beispielsweise durch geeignete Schlitzung der Hülse oder durch Materialverschwächung einzelner Abschnitte der Hülse, derart, daß mindestens eine federnde Zunge gebildet wird, die ein einfaches Einrasten beispielsweise der Rastmittel, nämlich der Nocken, in die zugeordneten Aufnahmeöffnungen ermöglicht. Die Einführung der Hülse in die Aufnahmeöffnung der Gelenkmuffe kann ferner dadurch vereinfacht werden, indem im Bereich des Mündungsrandes der Gelenkmuffenöffnung eine oder mehrere in ihrer Breite begrenzte Vertiefungen vorgesehen sind, in welche die Rastmittel, vorzugsweise die Rastnocken, beim Einführen der Hülse einliegen und so das Einführen der Hülse in die Gelenkmuffe erleichtern.

Die Zeichnungen zeigen zwei Ausführungsbeispiele der Erfindung.
- Fig. 1: zeigt im Längsschnitt die Teildarstellung eines Saugmundstückes mit angelenkter Gelenkmuffe mit einer darin aufgenommenen Saugleitung;
- Fig. 2: ist ein teilweiser Längsschnitt durch die Gelenkmuffe;
- Fig. 3: ist ein Längsschnittt durch die Hülse;
- Fig. 4: ist eine Ansicht der Hülse;
- Fig. 5: zeigt eine andere Ausführung der Hülse in Ansicht, bei der die Hülse schalenartig ausgebildet ist;
- Fig. 6: ist ein Schnitt durch die Hülsenschale nach Fig.5 entsprechend der Schnittlinie VI-VI;
- Fig. 7: ist ein Schnitt durch die Hülseschale nach der Schnittlinie VII-VII der Fig.5

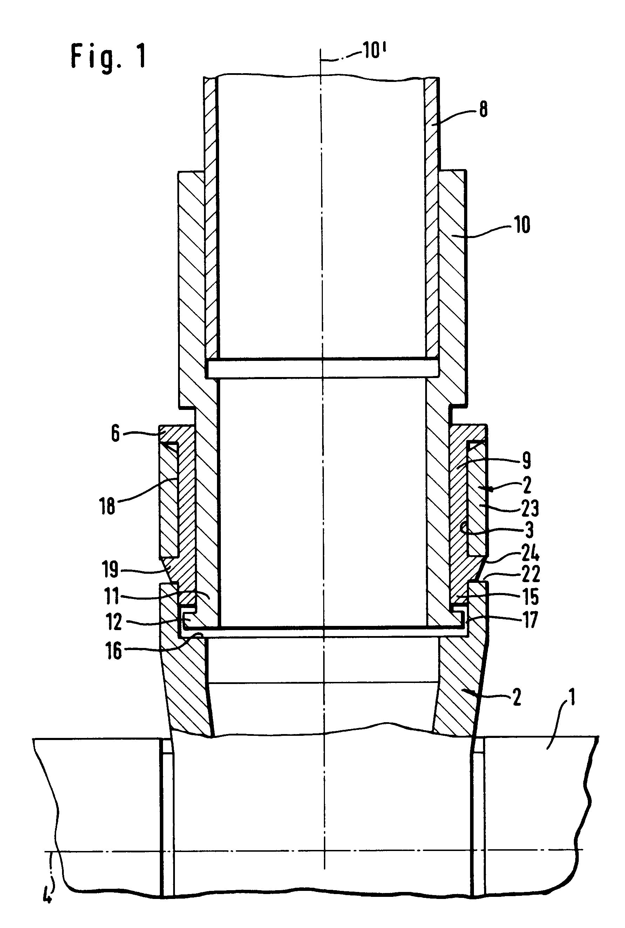

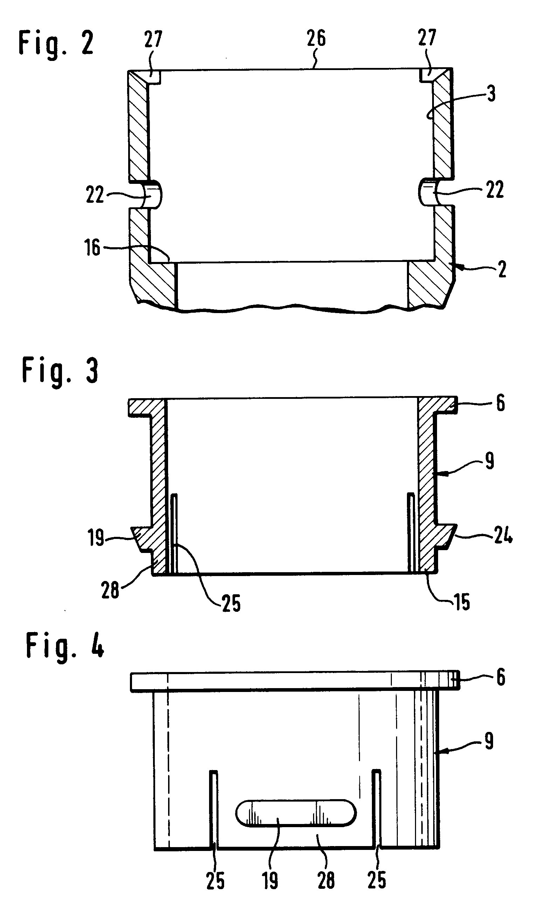

Fig. 1 zeigt ausschnittweise ein Saugmundstück 1, das zu einem - in seiner Gesamtheit nicht dargestellten - Saugreinigungsgerät, beispielsweise zu einem Staubsauger gehört und in bekannter Weise ausgebildet ist. Am Saugmundstück 1 ist zur strömungsübertragenden Verbindung mit dem Innenraum des Saugreinigungsgerätes eine Gelenkmuffe 2 gelagert, die um die Achse 4 des Saugmundstückes 1 schwenkbar ist. In der Gelenkmuffe 2 ist ein Anschlußstutzen 10 um seine Längsachse 10′ drehbar gelagert. Der Anschlußstutzen 10 ist mit einer nicht dargestellten Saugleitung lösbar verbunden. Die drehbare Lagerung und die axiale Fixierung des Anschlußstutzens 10 in der Gelenkmuffe 2 erfolgt mittels einer vorzugsweise zylindrischen Hülse 9, deren äußere Umfangsfläche, also ihr Außenmantel 18, in eine Aufnahmeöffnung 3 der Gelenkmuffe 2 eingesetzt ist. In dieser Hülse ist der Anschlußstutzen 10 drehbar und in axialer Richtung mit Spiel gelagert. Der Anschlußstutzen 10 weist am Ende seines in die Gelenkmuffe 2 hineinragenden Teiles 11 einen im Durchmesser größeren Bord 12 auf, der das untere Ende 15 der Hülse 9 radial untergreift und somit zusammen mit der radial nach innen hineinragenden unteren Stirnfläche 16 der Gelenkmuffe 2 einen das axiale Spiel des Anschlußstutzens 10 begrenzenden Anschlag bildet. Die zur Lagerung des Anschlußstutzens 10 in die Aufnahmeöffnung 3 der Gelenkmuffe 2 eingesetzte Hülse 9 ist im übrigen so dimensioniert, daß zwischen ihrem unteren Ende 15 und der unteren Stirnfläche 16 der inneren Aufnahmeöffnung 3 ein Freiraum durch die dort vorgesehene Hinterschneidung 17 gebildet wird. Diese Hinterschneidung 17 ist so bemessen, daß der Bord 12 am unteren Ende des Anschlußstutzens 9 mit geringem axialen Spiel leicht drehbar ist. Die Hülse 9 ist in der die zylindrische Aufnahme 3 begrenzenden Wandung unverdrehbar gehaltert. Hierzu hat sie bei dem dargestellten Ausführungsbeispiel an ihrem oberen Ende einen radialen Umfangsbund 6, der auf dem oberen Ende der Wandung 23 der Aufnahmeöffnung 3 der Gelenkmuffe 2 aufsitzt. Weiterhin sind Rastmittel vorgesehen, die am Außenmantel 18 der Hülse 9 liegen und radial abstehende Nocken 19 bilden. Diese Rastnocken 19 greifen in der Raststellung in ihnen zugeordnete Öffnungen 22 der Gelenkmuffenwand 23 ein, und zwar derart, daß die Hülse 9 gegen axiale und radiale Bewegungen sicher in der Gelenkmuffe 2 gehalten ist. Vorzugsweise sind zwei diametral gegenüberliegende Rastöffnungen 22 und ihnen zugeordnete Rastnocken 19 vorgesehen. Zum leichten Eindrücken der Hülse 9 in die Aufnahmeöffnung 3 der Gelenkmuffe 2 sind an den Rastnocken 19 in Eindrückrichtung Anschrägungen 24 angebracht. Darüberhinaus ist die Hülse 9 von ihrem unteren Ende 15 aus zu beiden Seiten der Rastnocken 19 mit parallel zur Längsachse verlaufenden Schlitzen 25 versehen, deren Längserstreckung die Rastnocken 19 überragt. Durch diese Schlitze 25 oder durch andere geeignete Mittel, beispielsweise durch Materialverschwächungen im Bereich der Rastelemente, werden elastische Abschnitte in Form federnder Zungen 28 gebildet, auf denen die Rastnocken 19 derart sitzen, daß sich die Zungen zusammen mit den Rastnocken 19 beim Eindrücken der Hülse in die Gelenkmuffe 2 nach innen biegen können. Zum leichteren Auffinden der richtigen Einstecklage der Hülse 9 für die Verrastung der Nocken 19 in den Öffnungen 22, also zu ihrem sicheren Einführen in diese Öffnungen, ist der Öffnungsrand 26 der Gelenkmuffe 2 (vgl. Fig. 2) mit Eintiefungen 27 versehen, die vorzugsweise nach innen zur Aufnahmeöffnung 3 hin verlaufen und in welche die Rastnocken 19 beim Einführen der Hülse 9 einpassen.

Durch die beschriebene Anordnung und die besondere Ausbildung der Hülse 9, beispielsweise als thermoplastischer Formteil, läßt sich insgesamt die Gelenkmuffe billig in Serie herstellen. Es wird somit eine aufwendige und damit teure spanabhebende Bearbeitung auch der Gelenkmuffe 2 mit Hinterschneidung 17 zur Aufnahme und axialen Fixierung des Bordes 12 am Anschlußstutzen 10 erspart. Darüberhinaus lassen sich Anschlußstutzen 10, Hülse 9 sowie Gelenkmuffe 2 in einfacher Weise montieren, so daß diese Teile insgesamt kostengünstig hergestellt werden können.

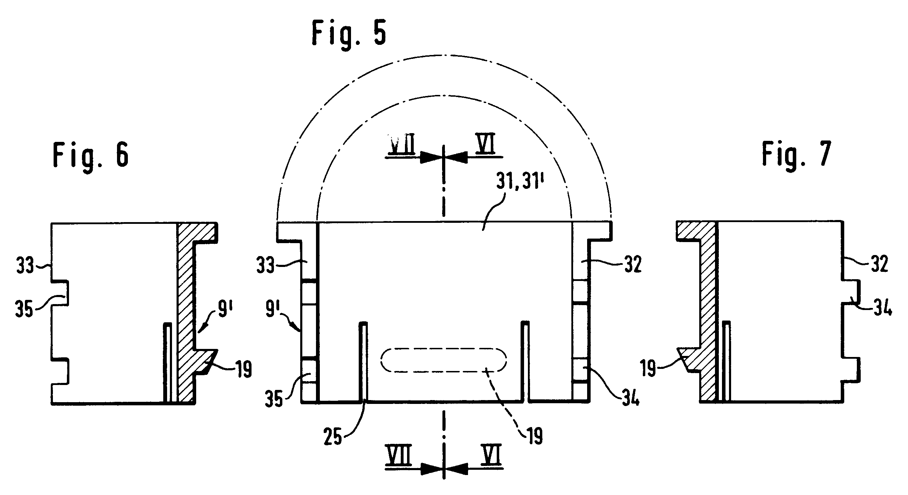

Ein weiteres Ausführungsbeispiel ist in den Fig. 5, 6 und 7 dargestellt. Hier besteht die Hülse 9′ aus zwei identischen Schalen 31, 31′. Die Schale 31 ist an ihren beiden in Achsrichtung sich erstreckenden Begrenzungsflächen 32, 33 mit Fixierungen 34, 35 beispielsweise nach Art einer Nut- und Federverbindung versehen, welche beim Zusammenfügen der beiden identischen Schalen 31, 31′ zu der Hülse 9′ ineinandergreifen und die Schalen gegen axiales Verschieben sichern. Diese Ausführungsform vermeidet das zwangweise Durchführen des im Durchmesser größeren Bordes 12 des Anschlußstutzens 10 durch die aus einem Teil bestehende Hülse 9 des Ausführungsbeispieles der Fig. 1 bis 4. Bei Verwendung der aus zwei Schalen gebildeten Hülse 9′ werden die beiden identischen Schalen 31, 31′ um das Ende 11 des Anschlußstutzens 10 gelegt, wobei die Fixiermittel 34, 35 ineinandergreifen, und in die Aufnahmeöffnung 3 der Gelenkmuffe eingedrückt.

## Patentansprüche

1. Gelenkmuffe (2) eines Saugmundstückes (1) mit in ihr drehbar gelagertem Anschlußstutzen (10) einer Saugleitung (8) eines Saugreinigungsgerätes, wobei der drehbare Anschlußstutzen (10) an seinem dem Saugmundstück (1) zugewandten Ende mit einem im Durchmesser vergrößerten Bord (12) versehen ist, der zur axialen Fixierung und drehbaren Lagerung des Anschlußstutzens (10) in eine Hinterschneidung (17) der zylindrischen Aufnahmeöffnung (3) hineinragt,
dadurch gekennzeichnet, daß zwischen dem Anschlußstutzen (10) und der zylindrischen Aufnahmeöffnung (3) der Gelenkmuffe (2) zur Bildung der Hinterschneidung (17) eine Hülse (9) vorgesehen ist, die mit der Gelenkmuffe (2) durch Rastmittel (19, 22) verbunden ist.

2. Gelenkmuffe nach Anspruch 1,
dadurch gekennzeichnet, daß die Hinterschneidung (17) zwischen dem unteren Ende (15) der Hülse (9) und einer unteren, die Aufnahmeöffnung (3) begrenzenden Stirnfläche (16) der Gelenkmuffe (2) durch axiales und radiales Spiel für den Bord (12) gebildet ist.

3. Gelenkmuffe nach Anspruch 1 oder 2,
dadurch gekennzeichnet, daß die axiale Erstreckung der Hülse (9) kleiner ist als die axiale Erstreckung der zylindrischen Aufnahmeöffnung (3) der Gelenkmuffe (2).

4. Gelenkmuffe nach einem der Ansprüche 1 bis 3,
dadurch gekennzeichnet, daß die Wandung (23) der Aufnahmeöffnung (3) der Gelenkmuffe (2) mit mindestens einer Rastöffnung (22) für eine Rastnocke (19) versehen ist.

5. Gelenkmuffe nach Anspruch 4,
dadurch gekennzeichnet, daß zwei einander gegenüberliegende Rastöffnungen vorgesehen sind.

6. Gelenkmuffe nach einem der Ansprüche 1 bis 5,
dadurch gekennzeichnet, daß die Hülse (9) an ihrem Außenmantel (18) ihres in die Aufnahmeöffnung (3) hineinragenden Teiles mit mindestens einer, vorzugsweise zwei gegenüberliegenden Rastnocken (19) versehen ist.

7. Gelenkmuffe nach einem der Ansprüche 5 oder 6,
dadurch gekennzeichnet, daß die Rastnocken (19) in Einschubrichtung der Hülse (9) in die Gelenkmuffe (2) mit Anschrägungen (24) versehen sind.

8. Gelenkmuffe nach einem der Ansprüche 1 bis 7,
dadurch gekennzeichnet, daß die Hülse (9) im Bereich ihrer Rastnocken (19) in radialer Richtung elastisch verbiegbare Abschnitte (28) aufweist, die vorzugsweise durch parallel zu ihrer Längsachse verlaufende Einschnitte (25) gebildet sind.

9. Gelenkmuffe nach Anspruch 8,
dadurch gekennzeichnet, daß die Einschnitte (25) beidseitig der Rastnocken (19) vorgesehen sind.

10. Gelenkmuffe nach einem der Ansprüche 1 bis 9,
dadurch gekennzeichnet, daß der Öffnungsrand der Gelenkmuffe (2) mindestens eine nach innen zur Aufnahmeöffnung (3) hin gerichtete Eintiefung (27) aufweist.

11. Gelenkmuffe nach Anspruch 10,
dadurch gekennzeichnet, daß die Eintiefung (27) geringfügig größer als die Breite der Rastnocken (19) der Hülse (9) ausgebildet ist.

12. Gelenkmuffe nach einem der Ansprüche 1 bis 11,
dadurch gekennzeichnet, daß die Hülse (9) aus zwei zusammensetzbaren, symmetrischen Schalen (31, 31′) besteht.

13. Gelenkmuffe nach Anspruch 12,
dadurch gekennzeichnet, daß die beiden Schalen (31, 31′) mit ineinandergreifenden Fixierungen (34, 35) versehen sind.

14. Gelenkmuffe nach einem der Ansprüche 1 bis 13,
dadurch gekennzeichnet, daß die Hülse (9) an ihrem dem Ende (15) abgewandten oberen Teil mit einem Umfangsbund (6) versehen ist, der den Endabschnitt der Wandung (23) der Gelenkmuffe (2) übergreift.

## Claims

1. Rotatable sleeve connection (2) between a vacuum cleaner nozzle (1) with a rotating connection (10) to a suction hose (8) of a vacuum cleaner, whereby the rotating connection (10) is provided with a bead (12) of a larger diameter at its end towards the nozzle (1) and which protrudes into a cut-out (17) in the cylindrical mounting opening (3) to secure the connection (10) and allow it to rotate,
characterised in that a sleeve (9) which is connected to the rotatable sleeve (2) by a locking mechanism (19, 22) is provided between the connection (10) and the cylindrical mounting opening (3) in the rotating sleeve to form the cut-out (17).

2. Rotatable sleeve connection according to claim 1, characterised in that the cut-out (17) is formed between the lower end (15) of the sleeve (9) and a lower front face (16) of the rotatable sleeve (2) forming the mounting opening (3) by axial and radial play for the bead (12).

3. Rotatable sleeve according to claim 1 or 2, characterised in that the axial length of the sleeve (9) is shorter than the axial length of the cylindrical mounting opening (3) in the rotating sleeve (2).

4. Rotating sleeve according to one of claims 1 to 3, characterised in that the wall (23) of the mounting opening (3) in the rotating sleeve (2) is provided with at least one locking opening (22) for a cam (19).

5. Rotating sleeve connection according to claim 4, characterised in that two locking openings are provided opposite each other.

6. Rotatable sleeve connection according to one of claims 1 to 6, characterised in that the sleeve (9) is fitted with at least one and preferably two cams (19) opposite each other on the outer sleeve (18) of the part protruding into the mounting opening (3).

7. Rotatable sleeve connection according to one of claims 5 or 6, characterised in that the cams (19) are bevelled (24) in the direction for inserting the sleeve (9) into the rotatable sleeve connection (2).

8. Rotatable sleeve connection according to one of claims 1 to 7, characterised in that the sleeve (9) is provided with flexible sections (28) in the radial direction in the area of its cams (19) and that the flexible sections are produced preferably by slots (25) parallel to its longitudinal axis.

9. Rotatable sleeve connection according to claim 8, characterised in that the slots (25) are provided on both sides of the locking cams (19).

10. Rotatable sleeve connection according to one of claims 1 to 9, characterised in that the edge of the opening in the rotatable sleeve connection (2) has at least one recess (27) pointing inwards to the mounting opening (3).

11. Rotatable sleeve connection according to claim 10, characterised in that the recess (27) is slightly larger than the width of the locking cam (19) on the sleeve (9).

12. Rotatable sleeve connection according to one of claims 1 to 11, characterised in that the sleeve (9) consists of two symmetrical cups (31, 31').

13. Rotatable sleeve connection according to claim 12, characterised in that the two cups (31, 31') are provided with interlocking fixings (34, 35).

14. Rotatable sleeve connection according to one of claims 1 to 13, characterised in that the sleeve (9) is provided with a bead (6) around its circumference in the top section away from the end (15) and that this bead grips the end section of the wall (23) on the rotatable sleeve connection (2).

## Revendications

1. Manchon articulé (2) d'un suceur (1), avec une tubulure de raccordement (10) d'un tuyau d'aspiration (8) d'un aspirateur, logée dans ce manchon avec une possibilité de rotation, la tubulure de raccordement rotative (10) étant munie, sur son extrémité tournée vers le suceur (1), d'un bord (12) de diamètre supérieur, qui pénètre dans une contre-dépouille (17) de l'orifice de réception cylindrique (3), pour la fixation axiale et le supportage rotatif de la tubulure de raccordement (10), caractérisé en ce qu'une douille (9), assemblée avec le manchon articulé (2) par des moyens d'encliquetage (19, 22), est prévue entre la tubulure de raccordement (10) et l'orifice de réception cylindrique (3) du manchon articulé (2 ) pour la formation de la contre-dépouille (17).

2. Manchon articulé suivant la revendication 1, caractérisé en ce que la contre-dépouille (17) est formée pour le bord (12), par un jeu axial et radial, entre l'extrémité inférieure (15) de la douille (9) et une face frontale inférieure (16) du manchon articulé (2), limitant l'orifice de réception (3).

3. Manchon articulé suivant l'une des revendications 1 et 2, caractérisé en ce que l'étendue axiale de la douille (9) est inférieure à l'étendue axiale de l'orifice de réception cylindrique (3) du manchon articulé (2).

4. Manchon articulé suivant l'une quelconque des revendications 1 à 3, caractérisé en ce que la paroi (23) de l'orifice de réception (3) du manchon articulé (2) est munie d'une ouverture d'encliquetage (22), au moins, pour un ergot (19).

5. Manchon articulé suivant la revendication 4, caractérisé par deux ouvertures d'encliquetage opposées l'une à l'autre.

6. Manchon articulé suivant l'une quelconque des revendications 1 à 5, caractérisé en ce que la douille (9) est munie, sur son enveloppe externe (18) de sa partie pénétrant dans l'orifice de réception (3), d'un ergot au moins, de deux ergots (19) en vis-à-vis de préférence.

7. Manchon articulé suivant l'une des revendications 5 et 6, caractérisé en ce que les ergots (19) sont munis de chanfreins (24) dans le sens d'emmanchement de la douille (9) dans le manchon articulé (2).

8. Manchon articulé suivant l'une quelconque des revendications 1 à 7, caractérisé en ce que la douille (9) présente, dans la zone de ses ergots (19), des sections (28) pouvant fléchir par élasticité dans le sens radial, qui sont formées de préférence par des entailles (25) parallèles à son axe longitudinal.

9. Manchon articulé suivant la revendication 8, caractérisé en ce que les entailles (25) sont prévues de part et d'autre des ergots (19).

10. Manchon articulé suivant l'une quelconque des revendications 1 à 9, caractérisé en ce que le rebord d'ouverture du manchon articulé (2) présente une cavité (27) au moins, dirigée vers l'intérieur en direction de l'orifice de réception (3).

11. Manchon articulé suivant la revendication 10, caractérisé en ce que la cavité (27) est légèrement supérieure à la largeur des ergots (19) de la douille (9).

12. Manchon articulé suivant l'une quelconque des revendications 1 à 11, caractérisé en ce que la douille (9) se compose de deux coques symétriques (31, 31'), qui peuvent être assemblées entre elles.

13. Manchon articulé suivant la revendication 12, caractérisé en ce que les deux coques (31, 31') sont munies de fixations (34, 35) s'engageant les unes dans les autres.

14. Manchon articulé suivant l'une quelconque des revendications 1 à 13, caractérisé en ce que la douille (9) est munie, sur sa partie supérieure opposée à l'extrémité (15), d'un collet périphérique (6), qui recouvre la section extrême de la paroi (23) du manchon articulé (2).
